Europäisches Patentamt

European Patent Office

Office européen des brevets

(11) Veröffentlichungsnummer: **0 531 354 B1**

(12) **EUROPÄISCHE PATENTSCHRIFT**

(45) Veröffentlichungstag der Patentschrift: **23.08.95**

(51) Int. Cl.6: **C30B 23/02**, G01B 11/06, G01N 21/84

(21) Anmeldenummer: **91909692.5**

(22) Anmeldetag: **29.05.91**

(86) Internationale Anmeldenummer: **PCT/DE91/00461**

(87) Internationale Veröffentlichungsnummer: **WO 91/19025 (12.12.91 91/28)**

(54) **Verfahren zur Messung der Schichtdicke und des Brechungsindex einer dünnen Schicht auf einem Substrat und Vorrichtung zur Durchführung des Verfahrens.**

(30) Priorität: **30.05.90 DE 4017440**

(43) Veröffentlichungstag der Anmeldung:
**17.03.93 Patentblatt 93/11**

(45) Bekanntmachung des Hinweises auf die Patenterteilung:
**23.08.95 Patentblatt 95/34**

(84) Benannte Vertragsstaaten:
**AT BE CH DE DK ES FR GB GR IT LI LU NL SE**

(56) Entgegenhaltungen:
**EP-A- 0 011 723**
**US-A- 4 815 856**

**APPLIED PHYSICS LETTERS, Bd. 55, Nr. 20, 13. November 1989, Seiten 2138-2140; SPRINTHORPE et al.: "In situ growth rate measurements during molecular beam epi-taxy using an optical pyometer"**

(73) Patentinhaber: **FRAUNHOFER-GESELLSCHAFT ZUR FÖRDERUNG DER ANGEWANDTEN FOR-SCHUNG E.V.**
**Leonrodstrasse 54**
**D-80636 München (DE)**

(72) Erfinder: **BÖBEL, Friedrich**
**Langenbrucker Weg 11**
**D-8525 Uttenreuth (DE)**
Erfinder: **BAUER, Norbert**
**Volckamerstr. 14**
**D-8520 Erlangen (DE)**

(74) Vertreter: **Münich, Wilhelm, Dr. et al**
**Kanzlei Münich, Steinmann, Schiller**
**Wilhelm-Mayr-Str. 11**
**D-80689 München (DE)**

JOURNAL OF VACUUM SCIENCE AND TECH-
NOLOGY: PART B., Bd. 3, Juli 1988, New
York, US; Seiten 842-845; WRIGHT et al.: "Improved gaas substrate temperature measurement during molecular-beam epitaxial
growth"

REVIEW OF SCIENTIFIC INSTRUMENTS, Bd.
44, Nr. 2, Februar 1970, New York, US; Seiten
247-249; ROBERTS et al.: "Thickness monitor
for transparent thin film deposition"

JOURNAL OF VACUUM SCIENCE AND TECH-
NOLOGY: PART B, Nr. 2, April 1990, New
York, US; Seiten 266-270; SPRINGTHORPE et
al.: "Epitaxial growth rate measurements during molecular beam epitaxy"

REVUE ROUMAINE DE CHIMIE, Bd. 23, Nr. 4,
1978, Seiten 515-522; MOROSANU et al.: "In
situ evaluation of the chemical vapor deposition rates of some thin films on silicon by
infrared interference"

## Beschreibung

### Technisches Gebiet

Die Erfindung betrifft ein Verfahren zur räumlich aufgelösten Messung der Dicke einer dünnen Schicht auf einem Substrat, sowie eine Vorrichtung zur Durchführung des Verfahrens.

Schichtdickenmessungen zählen zu den bedeutensten Hilfsmitteln bei der Qualitätskontrolle in der Halbleiterfertigung, insbesondere für die Überprüfung einzelner Prozeßschritte. Da die Prozeßumgebung beispielweise innerhalb eines Halbleiterfertigungsgerätes räumlich stark variieren kann, ist es besonders wünschenswert, die Schichtdicke über die gesamte Waferoberfläche zu messen.

Mit der zunehmenden Bauteile-Integration sind die Kosten pro Wafer stark angestiegen; deshalb wird eine vollständige Überprüfung jedes einzelnen Prozeßschrittes angestrebt, um fehlerhafte Teile möglichst früh zu erkennen und auszusortieren zu können.

### Stand der Technik

Ein Verfahren zur Messung der Wachstumsrate einer Epitaxieschicht auf einem Substrat ist aus der Fachveröffentlichung von A. J. Spring Thorpe u.a. "In Situ Growth rate measurements During Molecular Beam Epitaxie using an optical Pyrometer", Applied Physics Letter, 55, 1989, Seite 2138 bis 2140, bekannt geworden.

In diesem Artikel ist beschrieben, daß mit einem optischen Pyrometer während des Auftragens der Schicht die Oberflächentemperatur des Substrats gemessen wird. Dabei treten Oszillationen in der Temperatur auf, die der Wachstumsrate der Schicht zugeordnet werden können. Mit diesem Verfahren kann allerdings nicht der Absolutwert der Schichtdicke gemessen werden; weiterhin ist keine räumliche Auflösung über die Fläche der Schicht möglich.

Eine Möglichkeit, die Dicke von Schichten zu bestimmen, bietet die Interferenz von Lichtstrahlen, die an den beiden Oberflächen der Schicht reflektiert werden. Bei einer Anordnung, wie sie beispielsweise in F. Kohlrausch, "Praktische Physik", Band 1, 23. Auflage 1984, Seite 667, beschrieben ist, wird der Gangunterschied interferierender Strahlen durch deren Neigungswinkel bestimmt. Da alle Strahlenbündel mit gleichem Neigungswinkel unabhängig von ihrem Ausgangspunkt bei der Interferenz im gleichen Bildpunkt abgebildet werden, ist eine ortsaufgelöste Messung der Schichtdicke nicht möglich.

Darüber hinaus eignen sich die bekannten interferometrischen Methoden zur Schichtdickenbestimmung wegen des Zeitbedarfs für die Messung und die notwendigen Handhabungsmechanismen nicht unmittelbar für eine Messung während der Herstellung der Schicht.

Weiterhin ist ein Verfahren zur Messung der Schichtdicke während des Aufbringens der Schicht aus der DE 19 39 667 A1 bekannt. Bei diesem Verfahren wird die Schichtdicke durch Erfassen der von der Schicht emittierten elektromagnetischen Strahlung bestimmt.

Ferner ist ein Verfahren und eine Vorrichtung zur Bestimmung der Schichtdicke und des Brechungsindex von dünnen durchsichtigen Schichten aus der DE 24 48 294 A1 bekannt.

### Darstellung der Erfindung

Der Erfindung liegt die Aufgabe zugrunde, ein Verfahren anzugeben, mit dem während des Auftragens einer Schicht auf ein Substrat, eine räumlich aufgelöste Messung der Dicke der Schicht über die gesamte Fläche möglich ist.

Weiterhin soll eine Vorrichtung zur Durchführung dieses Verfahrens bereitgestellt werden.

Diese Aufgabe wird erfindungsgemäß durch das Verfahren gemäß Anspruch 1 gelöst.

Die Intensität zweier oder mehrerer interferierender elektromagnetischer Strahlenbündel, die nach Durchlaufen unterschiedlicher Wegstrecken in der Schicht eine Phasendifferenz aufweisen, wird gemessen und ausgewertet, die Temperaturstrahlung des Substrates dient als Quelle der elektromagnetischen Strahlung, und aus dem kontinuierlichen Spektrum der Temperaturstrahlung werden alle Frequenzanteile bis auf einen annähernd monochromatischen Anteil herausgefiltert.

Eine Vorrichtung zur Durchführung des erfindungsgemäßen Verfahrens ist im Anspruch 10 angegeben.

Ein durch die Temperaturstrahlung von einem beliebigen Punkt im Substrat ausgehendes Strahlenbündel wird an der Grenzfläche zwischen dem Substrat und der Schicht gebrochen und nach Durchlaufen der Schicht an deren freien Oberfläche durch Teilreflexion in einen reflektierten und einen transmittierten Teilstrahl zerlegt. Der reflektierte Strahl wird nach einer Reflexion an der Grenzfläche erneut durch Teilreflexion in einen reflektierten und einem zweiten transmittierten Teilstrahl zerlegt. Da die beiden transmittierten Teilstrahlen von derselben Quelle ausgehen, überlagern sie sich kohärent und interferieren nach Abbildung mit einer, in der Interferometrie-üblichen Abbildungsoptik, in einem Bildpunkt. Die im Bildpunkt gemessene Intensität ist eine Funktion des Gangunterschiedes zwischen den beiden transmittierten Teilstrahlen und damit eine Funktion der Dicke eines begrenzten Bereiches der Schicht, der der gemeinsamen Quelle der Teilstrahlen benachbart ist. Bei der Interferenz von mehr als zwei Teilstrahlen ändert sich das Ergebnis qualitativ nicht.

Durch die Vielzahl der Quellen elektromagnetischer Strahlung im Substrat kann die räumliche Verteilung der Dicke der Schicht über die gesamte Fläche der Schicht vermessen werden.

Damit sich die Interferenzen bei verschiedenen Wellenlängen der Temperaturstrahlung nicht wegmitteln, werden aus dem kontinuierlichen Spektrum alle Frequenzanteile bis auf einen annähernd monochromatischen Anteil herausgefiltert.

Weitere Ausgestaltungen und Weiterbildungen der Erfindung sind in den abhängigen Ansprüchen gekennzeichnet.

Gemäß Anspruch 2 werden die aus der Schicht austretenden Teilbündel durch ein schmalbandiges Filter geführt und durch eine Abbildungsoptik, im einfachsten Fall durch eine Linse, auf einen ortsauflösenden Detektor abgebildet. Die Ausgangssignale des Detektors, die den Intensitäten der interferierenden Teilstrahlen entsprechen, werden einer signalverarbeitenden Elektronik zugeführt, um unter Zuhilfenahme der Airy'schen Formel die Schichtendicken und die Brechungsindizes der Schicht zu bestimmen. Mit dem ausgewerteten Signal kann ein mehrdimensionales Bild der Schichtdicken- und Brechungsindexverteilung in der Schicht aufgebaut werden.

Um bei der Auswahl eines Detektors nicht auf Geräte mit hoher Empfindlichkeit (z. B. Restlichtverstärker) angewiesen zu sein, wird nach Anspruch 3 das Substrat geheizt. Dadurch wir die Intensität der Temperaturstrahlung erhöht.

Nach den Ansprüchen 4 und 5 können als ortsauflösende Detektoren Zeilen- oder Matrixdetektoren verwendet werden. Damit können die Verteilungen der Schichtdicken und der Brechungsindizes entweder über die gesamte Schicht oder entlang eines zeilenförmigen Bereichs gemessen werden. Bei dem letztgenannten Verfahren wird unter Verzicht der vollständigen Information der apparative Aufwand minimiert.

Bei dem erfindungsgemäßen Verfahren liefern die in einem Bildpunkt interferierenden Teilbündel Informationen, die über einen begrenzten Bereich der Schicht gemittelt sind. Dieser Bereich ist umso kleiner, je geringer der Einfluß der Vielfachinterferenzen und je kleiner der Winkel zwischen der Oberflächennormalen der Schicht und den austretenden Teilstrahlen ist. Mit dem in Anspruch 6 gekennzeichneten Verfahren, bei welchem die Teilstrahlen annähernd senkrecht aus der Oberfläche der Schicht austreten, wird eine hohe räumliche Auflösung in der Ebene der Schichtoberfläche erreicht.

Eine besonders vorteilhafte Weiterbildung des Verfahrens ist im Anspruch 7 gekennzeichnet. Durch die zeitabhängige Messung wird jede Veränderung der Schichtdicke unmittelbar verfolgt. Aufgrund der geringen Zeitkonstanten der Messung und Auswertung der Signale, eignet sich das erfindungsgemäße Verfahren zur Meßwertaufnahme für Prozeßsteuerungen. Dabei kann es sich nach Anspruch 8 um Auftragungsprozesse handeln, bei denen mittels chemischer und/oder physikalischer Reaktionen eine Schicht auf ein Substrat aufgebracht wird. Beispiele solcher Prozesse sind Chemical Vapor Deposition (CVD), Plasma Enhanced Chemical Vapor Deposition (PECVD), Molecular Beam Epitaxy (MBE) oder Elektronenstrahlbedampfung.

Wenn eine bereits aufgebrachte Schicht abgetragen werden soll, kann mit dem erfindungsgemäßen Verfahren nach Anspruch 9 auch die Schichtdicke während eines Abtrageprozesses, z. B. Trockenätzen, vermessen werden.

Die Vorrichtung zur Durchführung des Verfahrens besteht gemäß Anspruch 10 aus einem Substrathalter zur Aufnahme des Substrates, einem schmalbandigen Filter, das aus dem kontinuierlichen Spektrum der Temperaturstrahlung des Substrats eine annähernd monochromatische Strahlung herausfiltert, einer Abbildungsoptik und einem ortsauflösenden Detektor. Alle diese Komponenten sind entlang einer optischen Achse angeordnet. Die Ausgänge des ortsauflösenden Detektors sind mit einer signalverarbeitenden Elektronik verbunden.

Nach Anspruch 11 ist der Substrathalter in einer Prozeßkammer angeordnet, um die Dicke einer in der Prozeßkammer auf einem Substrat aufgebrachten Schicht vermessen zu können. Entsprechend dem Prozeß weist die Kammer Einströmventile für das Prozeßgas auf. Zur Auskopplung der Strahlung ist in eine Wand der Prozeßkammer ein vakuumdichtes Fenster eingesetzt. Alle anderen zur Durchführung des Verfahrens notwendigen Komponenten sind außerhalb der Prozeßkammer angebracht.

Gemäß den Ansprüchen 13 und 15 werden als Detektoren vorteilhaft Kameras mit Halbleiterbildwandlern verwendet. Geeignete CCD-Kameras (Charge Coupled Device) mit hohem räumlichen Auflösungsvermögen und genügender Empfindlichkeit sind auch im Wellenlängenbereich der Temperaturstrahlung bekannt.

Bei der Verwendung einer Kamera mit zeilenförmig angeordneten Halbleiterbildwandlern kann nach Anspruch 14 ein Gitter- oder ein Prismenmonochromator eingesetzt werden.

Wird eine Kamera mit Halbleiterbildwandlern eingesetzt, die matrixförmig angeordnet sind, findet nach Anspruch 16 ein schmalbandiges Interferenzfilter zur Monochromatisierung der Temperaturstrahlung Anwendung.

Die Wellenlänge $\lambda_o$ der maximalen Transmission des Filters ist so festgelegt, daß das Substrat für diese Wellenlänge undurchsichtig, die Schicht jedoch durchsichtig ist. Bei einer Schicht aus Siliziumdioxid auf einem Siliziumsubstrat ist die Wellenlänge der maximalen Transmission $\lambda_o$ = 1 $\mu$m eine geeignete Wahl. Die Halbwertsbreite $\Delta\lambda$ des Filters wird derart gewählt, daß $\lambda_o/\Delta\lambda \geq$ 100 ist. Dadurch ist sichergestellt, daß sich die Interferenzerscheinungen, die zu verschiedenen Wellenlängen gehören, nicht wechselseitig stören.

Um eine höhere Intensität der elektromagnetischen Strahlung zu erreichen, wird das Substrat geheizt. Die Heizung erfolgt beispielsweise nach Anspruch 17 mit einem Heizelement, das in der Substrathalterung angebracht ist. Auf diese Anordnung wird zurückgegriffen, wenn das Schichtdickenwachstum bei MBE-Prozessen verfolgt werden soll, da eine solche Heizung in der zugehörigen Prozeßkammer bereits vorgesehen ist.

Zur Heizung des Substrats können nach Anspruch 18 auch größere Bereiche der Prozeßkammer als Ofen dienen, wie dies bei Siliziumoxidationsprozessen üblich ist.

Die mit der Erfindung erzielten Vorteile bestehen insbesondere darin, daß die Schichtdicken einer Schicht räumlich aufgelöst über die gesamte Oberfläche der Schicht gemessen werden können. Damit können lokale Abweichungen von vorgegebenen Sollwerten sicher ermittelt werden. Aufgrund der Meßergebnisse kann die Vorrichtung zur Durchführung eines Abscheide- oder eines Abtragsprozesses optimiert werden.

Das Verfahren erlaubt eine schnelle Meßwertaufnahme und Auswertung, so daß der Aufwachsvorgang einer Schicht auf ein Substrat als Funktion der Zeit beobachtet werden kann. Wegen der geringen Zeitkonstante der Messung kann das Verfahren auch zur Prozeßsteuerung eingesetzt werden.

Das Verfahren zeichnet sich durch eine hohe Auflösung sowohl in Aufwachsrichtung, als auch in der Ebene der Schicht aus. Das Verfahren ist unempfindlich gegenüber hohen Umgebungstemperaturen und gegenüber chemisch reaktiven Gasen und Plasmen, so daß es sich zur Kontrolle vieler Auftrage- bzw. Abtrageprozesse eignet. Im Gegensatz zu bekannten interferometrischen Verfahren ist das erfindungsgemäße Verfahren auch gegen mechanische Störungen, wie z.B. Erschütterungen, unempfindlich.

Da keine externe Lichtquelle benötigt wird, eignet sich das Verfahren besonders für den Einsatz bei Hochvakuum (HV)- und Ultrahochvakuum (UHV)-Prozessen. Zur Auskoppelung der Temperaturstrahlung genügt ein Fenster. Das Verfahren benötigt nur wenige Komponeten und weist deshalb ein günstiges Kosten/Nutzen-Verhältnis auf.

Einsatzgebiete sind bevorzugt die in situ-Vermessung von zweidimensionalen Schichtdickenverteilungen in Schichten, die in Oxidationsöfen, Sputter-, Abscheide-, CVD- oder NBE-Anlagen auf ein Substrat aufgebracht werden. Es eignet sich auch für die Bestimmung der damit verknüpften Größen wie Aufwachsrate, Reflexions- und Absorbtionskoeffizienten.

Da das erfindungsgemäße Verfahren bisher in der Literatur noch nicht beschrieben ist, wird vorgeschlagen, dafür den Begriff "Pyrometrische Interferometrie" einzuführen.

## Kurze Beschreibung der Zeichnung

Ein Ausführungsbeispiel der Erfindung ist in den Zeichnungen dargestellt und wird im folgenden näher beschrieben. Es zeigen:

Fig. 1      eine schematische Darstellung des Meßprinzips des erfindungsgemäßen Verfahrens,

Fig. 2      eine schematische Darstellung einer erfindungsgemäßen Vorrichtung.

## Darstellung von Ausführungsbeispielen

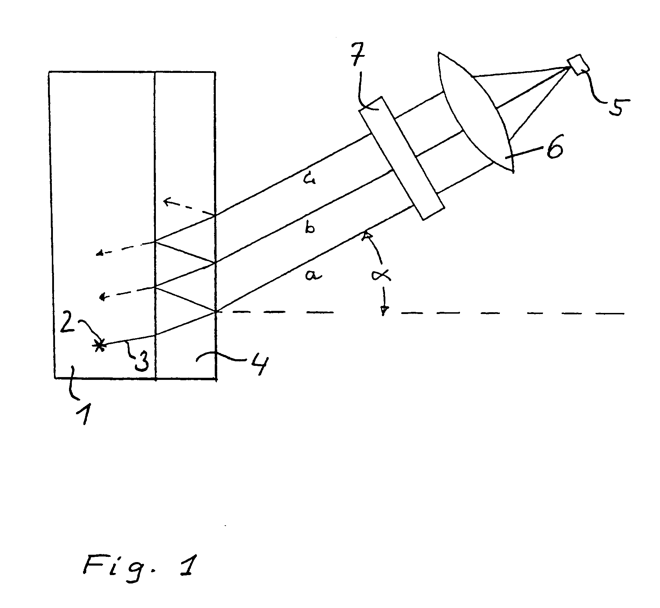

Ein beliebiger Punkt in einem Substrat 1 der Figur 1 wirkt als Quelle 2 von Temperaturstrahlung und sendet das Strahlenbündel 3 aus, das an der Grenzfläche zwischen dem Substrat 1 und einer auf dem Substrat aufgebrachten Schicht 4 sowie an der freien Oberfläche der Schicht 4, gebrochen bzw. reflektiert wird. Da die dabei entstehenden Teilstrahlen a,b,c von derselben Quelle 2 ausgehen, überlagern sie sich kohärent und interferieren miteinander in einem Punkt des Detektors 5. Der Abstand der Teilstrahlen a,b,c voneinander und damit der durch den Teilstrahl 3 erfaßte Bereich der Schicht 4 ist umso kleiner, je kleiner der Winkel $\alpha$ zwischen der Oberlächennormalen und den Teilstrahlen a,b,c ist. Um ein möglichst hohes räumliches Auflösungsvermögen zu erreichen, wird der Winkel $\alpha$ annähernd Null gewählt.

Die Abbildung der Teilstrahlen a,b,c auf den Detektor 5 erfolgt durch die Abbildungsoptik 6, die im dargestellten Fall aus einer Sammellinse besteht. Um eine gegenseitige Beeinflussung der Interferenzen verschiedener Wellenlängen der Temperaturstrahlung zu eliminieren, wird die Strahlung durch ein schmalbandiges Filter 7 geführt.

Die von verschiedenen Quellen im Substrat ausgehenden Teilstrahlen überlagern sich in verschiedenen Punkten des Detektors 5, wodurch ein räumlich aufgelöstes Bild der Intensitäten der aus verschiedenen Bereichen der Schicht 4 ausgehenden interferierenden Strahlen entsteht.

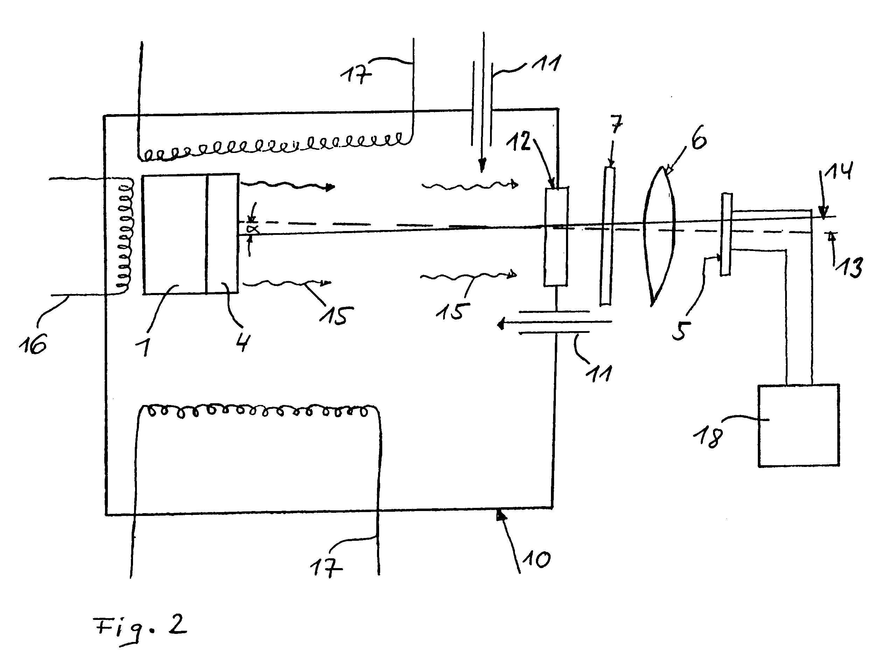

In Figur 2 ist eine erfindungsgemäße Vorrichtung schematisch dargestellt. In einer Prozeßkammer 10 ist das Substrat 1 mit der Schicht 4 angeordnet. Die Ausgestaltung der Prozeßkammer 10 ist dem Prozeß angepaßt mit dessen Hilfe die Schicht 4 auf das Substrat 1 aufgebracht oder abgetragen wird. Die Prozeßkammer 10 ist beispielsweise als Vakuumkammer ausgebildet, die zum Einlaß von Prozeßgasen Einströmventile 11 aufweist. In der Wand der Prozeßkammer 10 ist ein Fenster 12 zum Auskoppeln der Wärmestrahlung 15 des Substrats 1 vakuumdicht eingebaut. Zur Erhöhung der Intensität der Wärmestrahlung kann das Substrat 1 mit Hilfe des Heizelementes 16 geheizt werden. Zusätzlich oder alternativ können Heizelemente 17 in der Prozeßkammer 1 angeordnet sein, so daß die Kammer als Ofen wirkt.

Entlang der optischen Achse 13 sind außerhalb der Prozeßkammer 10 das Filter 7, die Abbildungsoptik 6 und der Detektor 5 angeordnet. Der Winkel $\alpha$ zwischen der optischen Achse 13 und der Oberflächennormalen 14 der Schicht 4 ist annähernd Null.

Das Fenster 12 muß im Transmissionsbereich des Filters 7 durchsichtig sein. Als Materialien kommen chemisch resistente, wasserschwer- bzw. wasserunlösliche Materialien in Betracht, die gute Transmissionseigenschaften im Wellenlängenbereich der nahen und mittleren Infrarotstrahlung (0,7 $\mu$m bis 1,2 $\mu$m) aufweisen. Geeignete Materialien sind beispielsweise $SiO_2$, $Al_2O_3$, ZnSe, CdTe, ZnS, $LaF_3$.

Die Abbildungsoptik 6 bildet die Oberfläche der Schicht 4 auf den Detektor 5 ab. Für die Transmissionseigenschaften der Abbildungsoptik gelten dieselben Bedingungen wie für das Fenster 12. Die elektrischen Signalausgänge des Detektors 5 sind mit einer signalverarbeitenden Elektronik 18 verbunden.

**Patentansprüche**

1. Verfahren zur Messung der Schichtdicke und des Brechungsindex einer dünnen Schicht (4) auf einem Substrat (1), bei dem die Intensität von zwei oder mehreren interferierenden elektromagnetischen Strahlenbündeln (a,b,c), die der Temperaturstrahlung des Substrats entsprechen und nach Durchlaufen unterschiedlicher Wegstrecken in der Schicht eine Phasendifferenz aufweisen, gemessen und anschließend ausgewertet wird, und bei dem aus dem kontinuierlichen Spektrum der Temperaturstrahlung alle Frequenzanteile bis auf einen annähernd monochromatischen Anteil herausgefiltert werden, dadurch **gekennzeichnet**, daß die jeweils von kleinen Oberflächenbereichen (2) des Substrates ausgehenden Strahlen auf jeweils einen Bildpunkt eines ortsauflösenden Detektors (5) abgebildet werden, der die Intensität der interferierenden Strahlen erfaßt.

2. Verfahren nach Anspruch 1, dadurch **gekennzeichnet**, daß ein von einem beliebigen Punkt (2) im Substrat (1) ausgehendes Strahlenbündel (3) der emittierten Temperaturstrahlung an der Grenzfläche zwischen dem Substrat und der zu vermessenden Schicht (4) gebrochen wird, und durch mehrfache Teilreflexion an den Oberflächen der Schicht in mehrere Teilbündel (a,b,c) zerlegt wird, daß die aus der substratabgewandten Oberfläche der Schicht austretenden Teilstrahlen durch ein schmalbandiges Filter (7) geführt und mit Hilfe einer Abbildungsoptik (6) auf den ortsauflösenden Detektor (5) abgebildet werden und daß aus der Intensität der interferierenden Teilstrahlen mit Hilfe einer signalverarbeitenden Elektronik (18) unter zu Hilfenahme der Airy'schen Formel die Schichtdicke und der Brechungsindex der Schicht bestimmt werden.

3. Verfahren nach Anspruch 1 oder 2, dadurch **gekennzeichnet**, daß das Substrat (1) geheizt wird.

4. Verfahren nach einem der Ansprüche 1 bis 3, dadurch **gekennzeichnet**, daß durch Verwendung eines Zeilendetektors ein zeilenförmiger Bereich der Schicht auf dem Substrat vermessen wird.

5. Verfahren nach einem der Ansprüche 1 bis 3, dadurch **gekennzeichnet**, daß durch Verwendung eines Matrixdetektors die gesamte Schicht vermessen wird.

6. Verfahren nach einem der Ansprüche 1 bis 5, dadurch **gekennzeichnet**, daß die Teilstrahlen, die zur Messung herangezogen werden, annähernd senkrecht aus der Oberfläche der Schicht austreten.

7. Verfahren nach einem der Ansprüche 1 bis 6, dadurch **gekennzeichnet**, daß das zeitliche Verhalten der Intensitäten der interferierenden Strahlenbündel der Temperaturstrahlung gemessen wird.

8. Verfahren nach einem der Ansprüche 1 bis 7, dadurch **gekennzeichnet**, daß die Messung der Schichtdicke und des Brechungsindex der Schicht während eines Auftragungsprozesses erfolgt, wobei das Substrat in einer Prozeßkammer (10) angeordnet ist und die elektromagnetische Strahlung aus der Prozeßkammer ausgekoppelt wird.

9. Verfahren nach einem der Ansprüche 1 bis 7, dadurch **gekennzeichnet**, daß die Messung der Schichtdicke und des Brechungsindex der Schicht (4) während eines Abtragungsprozesses erfolgt, wobei das Substrat in einer Prozeßkammer (10) angeordnet ist und die elektromagnetische Strahlung aus der Prozeßkammer ausgekoppelt wird.

10. Vorrichtung zur Messung der Schichtdicke und des Brechungsindex einer dünnen Schicht (4) auf einem Substrat (1) bei der entlang einer optischen Achse ein Substrathalter, der das Substrat (1) aufnimmt, das als Temperaturstrahlungsquelle eingesetzt ist,
ein Filter (7), der als Bandpaß für einen schmalen Spektralbereich der emittierten Temperaturstrahlung dient,
eine Abbildungsoptik (6), die die jeweils von kleinen Oberflächenbereichen des Substrats ausgehenden Strahlen auf jeweils einen Bildpunkt eines ortsauflösenden Detektors (5) abbildet, und
ein ortsauflösenden Detektor (5), der die Intensität der interferierenden Strahlen erfaßt, und eine signalverarbeitende Elektronik (18) vorhanden ist.

11. Vorrichtung nach Anspruch 10, dadurch **gekennzeichnet**, daß der Substrathalter mit einem Heizelement (16) ausgestattet ist.

12. Vorrichtung nach Anspruch 10 oder 11, dadurch **gekennzeichnet**, daß der Substrathalter mit dem Substrat in einer Prozeßkammer (10) angeordnet ist, die Einströmventile (11) und ein vakuumdicht eingesetztes und für die Temperaturstrahlung transparentes Fenster (12) aufweist, das in der optischen Achse angeordnet ist.

13. Vorrichtung nach Anspruch 12, dadurch **gekennzeichnet**, daß die Prozeßkammer (10) als Ofen ausgebildet ist.

14. Vorrichtung nach einem der Ansprüche 10 bis 13, dadurch **gekennzeichnet**, daß die optischen Achse annähernd senkrecht zur Substratoberfläche verläuft.

15. Vorrichtung nach einem Ansprüche 10 bis 14, dadurch **gekennzeichnet**, daß der Detektor (5) eine Kamera mit zeilenförmig angeordneten Halbleiterbildwandlern ist.

16. Vorrichtung nach Anspruch 15, dadurch **gekennzeichnet**, daß das Filter (7) ein Gitter- oder ein Prismenmonochromator ist.

17. Vorrichtung nach einem der Ansprüche 10 bis 14, dadurch **gekennzeichnet**, daß der Detektor (5) eine Kamera mit einer Halbleiterbildwandler-Matrix ist.

18. Vorrichtung nach Anspruch 17, dadurch **gekennzeichnet**, daß das Filter (7) ein schmalbandiges Interferenzfilter ist.

**Claims**

1. Method of measuring the thickness and the refractive index of a thin film (4) on a substrate (1), wherein the intensity of two or more electromagnetic beam pencils (a, b, c) corresponding to the thermal radiation of said substrate and presenting a phase difference after the passage over different distances in the film, are measured and then evaluated, and wherein all the frequency components, with the exception of an approximately monochromatic component, are filtered out from the continuous spectrum of the thermal radiation, **characterized** in that the beams respectively emitted by small areas on the surface (2) of said substrate are projected on one picture point, respectively, of a local-resolution detector (5) which detects the intensity of the interfering beams.

2. Method according to Claim 1, **characterized** in that a beam pencil (3) of the emitted thermal radiation, which exits from any point (2) in said substrate (1) is diffracted at the interface between said substrate (1) and the film (4) to be measured and is decomposed by multiple partial reflection at the surface of the film into several partial beam pencils (a, b, c); in that the partial beams leaving the film surface turned away from said substrate are passed through a narrow-band filter (7), while they are projected onto said local-resolution detector (5) by means of an optical imaging system (6), and in that the thickness and the refractive index of the film are detected by means of an electronic signal-processing system (18) on the basis of the Airy formula by derivation from the intensity of the interfering partial beams.

3. Method according to Claim 1 or 2, **characterized** in that said substrate (1) is heated.

4. Method according to any of the Claims 1 to 3, **characterized** in that a linear area of the film on said substrate is measured by using a line detector.

5. Method according to any of the Claims 1 to 3, **characterized** in that the entire film is measured by using a matrix detector.

6. Method according to any of the Claims 1 to 5, **characterized** in that the partial beams considered for measurement exit from the surface of said layer in an approximately orthogonal direction.

7. Method according to any of the Claims 1 to 6, **characterized** in that the variation in time of the intensities of said interfering beam pencils of the thermal radiation is measured.

8. Method according to any of the Claims 1 to 7, **characterized** in that the film thickness and the refractive index of the film are measured during an application process, while the substrate is disposed in a process chamber (10) and the electromagnetic radiation is coupled out from said process chamber.

9. Method according to any of the Claims 1 to 7, **characterized** in that the film thickness and the refractive index of said film (4) are measured during a removal process, while said substrate is disposed in a process chamber (10) and the electromagnetic radiation is coupled out from said process chamber.

10. Device for measuring the film thickness and the refractive index of a thin film (4) on a substrate (1), wherein the following assemblies are disposed along an optical axis: a substrate carrier for holding said substrate (1) serving as source of thermal radiation,
a narrow-band filter (7) serving as band-pass filter for a narrow spectral bandwidth of the emitted thermal radiation,
an optical imaging system (6) which projects the beams respectively exiting from small areas on the surface of said substrate on respectively one picture point of a local-resolution detector (5), and
a local-resolution detector (5) which detects the intensity of the interfering beams,
as well as an electronic signal-processing system.

11. Device according to Claim 10, **characterized** in that said substrate carrier is equipped with a heating element (16).

12. Device according to Claim 10 or 11, **characterized** in that said substrate carrier, together with said substrate, is disposed inside a process chamber (10) provided with inlet valves (11) and a window translucent to thermal radiation, which window is mounted in a vacuum-tight manner and is disposed on the optical axis.

13. Device according to Claim 12, **characterized** in that said process chamber (10) is configured in the form of a furnace.

14. Device according to any of the Claims 10 to 13, **characterized** in that the optical axis extends approximately orthogonally on the surface of said substrate.

15. Device according to any of the Claims 10 to 14, **characterized** in that said detector (5) is a camera provided with semiconductor image converters arranged in lines.

16. Device according to Claim 15, **characterized** in that said filter (7) is a monochromator with optical grating or prism.

17. Device according to any of the Claims 10 to 14, **characterized** in that said detector (5) is a matrix camera provided with semiconductor image converters.

18. Device according to Claim 17, **characterized** in that said filter (7) is an interferential narrow-band filter.

**Revendications**

1. Procédé de mesure de l'épaisseur et l'indice de réfraction d'une couche mince (4) sur un substrat (1), dans lequel l'intensité de deux ou plus faisceaux de rayons électromagnétiques (a, b, c), qui correspondent à la radiation thermique dudit substrat et présentent une différence en phase après leur passage par des distances différentes dans la couche, sont mesurées et ensuite évaluées, et dans lequel tous les composants de fréquences, à l'exception d'un composant approximativement monochromatique, sont filtrés du spectre continu de la radiation thermique,
**caractérisé** en ce que les images des rayons respectivement émis par des petites zones de la surface (2) dudit substrat sont formées sur respectivement un point d'image d'un détecteur (5) à résolution locale, qui détecte l'intensité des rayons qui s'interfèrent.

2. Procédé salon la revendication 1, **caractérisé** en ce qu'un faisceau de rayons (3) de la radiation thermique émise, qui sort d'un point quelconque (2) dans ledit substrat (1) est réfracté à la surface limite entre ledit substrat (1) et la couche (4) à mesurer et décomposé par réflexion partielle multiple aux surfaces de la couche dans plusieurs faisceaux partiels (a, b, c); en ce que les rayons partiels qui sortent de la surface de la couche, qui est opposée audit substrat, sont passés à travers un filtre à bande étroite (7), pendant que leurs images sont faites sur ledit détecteur (5) à résolution locale, moyennant une optique de reproduction (6), et en ce qu'au moyen d'un système électronique (18) de traitement de signaux, l'épaisseur de la couche et l'indice de réfraction de la couche sont détectées, à la base de la formule d'Airy, en les déduisant de l'intensité des rayons partiels qui s'interfèrent.

3. Procédé salon la revendication 1 ou 2, **caractérisé** en ce que ledit substrat (1) est chauffé.

4. Procédé salon une quelconque des revendications 1 à 3, **caractérisé** en ce qu'une zone linéaire de la couche sur ledit substrat est mesurée en utilisant un détecteur ligne par ligne.

5. Procédé selon une quelconque des revendications 1 à 3, **caractérisé** en ce que toute la couche est mesurée en utilisant un détecteur à matrice.

6. Procédé selon une quelconque des revendications 1 à 5, **caractérisé** en ce que les rayons partiels, qui sont considérés pour la mesure, sortent de la surface de ladite couche en sens approximativement orthogonal.

7. Procédé selon une quelconque des revendications 1 à 6, **caractérisé** en ce qu'on mesure la loi en temps des intensités desdits faisceaux de rayons, qui s'interfèrent, de la radiation thermique.

8. Procédé selon une quelconque des revendications 1 à 7, **caractérisé** en ce que la mesure de l'épaisseur de la couche et de l'indice de réfraction de la couche se fait au cours d'un processus de l'application ledit substrat étant disposé dans une chambre de processus (10) et en sortant le rayonnement électromagnétique de ladite chambre de processus.

9. Procédé selon une quelconque des revendications 1 à 7, **caractérisé** en ce que la mesure de l'épaisseur de la couche et de l'indice de réfraction de la couche (4) se fait au cours d'un processus d'enlèvement, ledit substrat étant disposé dans une chambre de processus (10) et en sortant le rayonnement électromagnétique de ladite chambre de processus.

10. Dispositif de mesure de l'épaisseur de couche et de l'indice de réfraction d'une couche mince (4) sur un substrat (1), dans lequel sont disposés, le long d'un axe optique, un porte-substrat pour le logement dudit substrat (1) qui est utilisé comme source de radiation thermique, un filtre à bande étroite (7), qui sert comme passe-bande pour une bande spectrale étroite de la radiation thermique émise, une optique de reproduction (6), qui fait les images respectives des rayons qui sortent chacun des petites zones de la surface dudit substrat, sur respectivement un point d'image d'un détecteur (5) à résolution locale, et un détecteur (5) à résolution locale, qui détecte l'intensité des rayons qui s'interfèrent, ainsi qu'un système électronique de traitement de signaux.

11. Dispositif selon la revendication 10, **caractérisé** en ce que ledit porte-substrat est prévu d'un élément de chauffage (16).

12. Dispositif selon la revendication 10 ou 11, **caractérisé** en ce que ledit porte-substrat, ensemble avec ledit substrat, est disposé à l'intérieur d'une chambre de processus (10) qui est munie de soupapes d'admission (11) et d'une fenêtre transparente à la radiation thermique, qui est montée de façon étanche au vide et qui est disposée sur l'axe optique.

13. Dispositif selon la revendication 12, **caractérisé** en ce que ladite chambre de processus (10) est configurée sous forme d'un four.

14. Dispositif selon une quelconque des revendications 10 à 13, **caractérisé** en ce que l'axe optique s'étend en sens approximativement orthogonal sur la surface dudit substrat.

**15.** Dispositif selon une quelconque des revendications 10 à 14,
**caractérisé** en ce que ledit détecteur (5) est une caméra à des transformateurs d'images semi-conducteurs disposés en lignes.

**16.** Dispositif selon la revendication 15,
**caractérisé** en ce que ledit filtre (7) est un monochromateur à réseau ou à prisme.

**17.** Dispositif selon une quelconque des revendications 10 à 14,
**caractérisé** en ce que ledit détecteur (5) est une caméra à matrice de transformateurs d'images semi-conducteurs.

**18.** Dispositif selon la revendication 17,
**caractérisé** en ce que ledit filtre (7) est un filtre interférentiel à bande étroite.

Fig. 1

Fig. 2

EP 0 531 354 B1